# EUROPEAN PATENT APPLICATION

(11) **EP 2 296 069 A1**
(43) Date of publication of application: **16.03.2011**
(21) Application number: 09170142.5
(22) Date of filing: 14.09.2009
(51) Int. Cl.: G05B 23/02

(54) **Process monitoring system**

(71) Applicant: ABB Research Ltd., 8050 Zürich (CH)
(72) Inventor: Ganz, Christopher, CH-8046, Zürich (CH); Bhargva, Gaurav, 560008, Karnataka (IN); Naedele, Martin, CH-8050, Zürich (CH); Schierholz, Ragnar, CH-4052, Basel (CH)
(74) Representative: ABB Patent Attorneys

(57) **Abstract**

The present invention is concerned with a process monitoring system 12, for example for an industrial plant or for monitoring an industrial process. The process monitoring system 12 comprises a 3D display device 36 which is adapted to visualize process data 66 of the process monitoring system 12 in a three-dimensional way. The system 12 supports an operator 48, 50 supervising the process data 66 in monitoring complex relationships in more than two variables.

## Description

### FIELD OF THE INVENTION

The invention relates to the field of monitoring large scale technical processes, for example the monitoring of an industrial process or the monitoring of an industrial plant. In particular the invention relates to a process monitoring system, to a use of a process monitoring system, to a method of monitoring a process, to a program element and to a computer-readable medium.

### BACKGROUND OF THE INVENTION

Many process monitoring systems for monitoring a large scale technical process, e. g. for an industrial plant, air traffic control, or public transport, monitor a plurality of process variables. The monitored process variables or the process data, respectively, may be displayed on one or more monitors situated in an operator station and are watched by a human operator. Due to the usage of monitors, the process monitoring system maps the high dimensional process data into two dimensions. Even if the displayed process data may be coloured or displayed as pseudo 3D-graphics, high skills of the operator in recognizing the high dimensional relationships of the two dimensional displayed process data and a high ability in the geometrical thinking of the operator are required.

### DESCRIPTION OF THE INVENTION

It is an object of the invention to provide a process monitoring system with a more intuitive human-machine-interface.

This object is achieved by the subject-matter of the independent claims. Further exemplary embodiments are evident from the dependent claims.

A first aspect of the invention relates to a process monitoring system for monitoring a large scale industrial or technical process and/or a large scale industrial plant. For example, the process monitoring system may be adapted to monitor a power generation facility or a power grid network.

According to an embodiment of the invention, the process monitoring system comprises a 3D display device, wherein the 3D display device is adapted to display a three-dimensional diagram, the three-dimensional diagram being based on process data of the industrial process monitored by the process monitoring system.

In other words, a process monitoring system, for example for an industrial plant or for monitoring an industrial process, may comprise a 3D display device which is adapted to visualize process data from the industrial process in a three-dimensional way. The system may support an operator supervising the process data displayed by the system in monitoring complex relationships in more than two variables.

The process monitoring system may use a 3D display device or multiple 3D display devices as integrated part of a monitoring system in an operator station in order to visualize three-dimensional and more-dimensional process data, which may comprise monitoring and control trajectories, in an intuitive way.

A facility being monitored by the the process monitoring system may comprise field devices like sensors, for example for measuring the current and voltage of an electrical line. It may comprise actuators like a pump or a valve. Distributed components of the facility, the distributed components comprising for example field devices, controllers, sensors and/or actuators, may be linked to a central control station housing the process monitoring system. The control station may comprise an operator station, in which process data, which may be gathered by a central controller from the distributed components, is displayed to a human operator. The human operator may monitor process data of the process monitoring system in the operator station.

The process monitoring system may be a component of an industrial plant or critical infrastructure. For example, the process monitoring system may be a SCADA system, i.e. a system for supervisory control and data acquisition.

The process monitoring system may comprise a data gathering and storing device like a computer and a human machine interface device. The human machine interface device may be a device which is adapted to present process data to a human operator in the operator station. The human operator may not only monitor but may also control the process by the human machine interface device. The human machine interface device may be linked to a data gathering and storing device of the process monitoring system, to provide process data, like raw sensor data, trending data, diagnostic data and further data like e.g. management information for the process and/or scheduled maintenance procedures.

Accordingly, a process monitoring system may be a system that is adapted to display process data to a person and with which the person, i.e. the human operator, may manipulate the process data, for example to influence the behaviour of the process monitoring system.

A 3D display device may be defined as a device which is adapted to allow a person a stereoscopic viewing of a scene or an object displayed by the 3D display device. It may also be a special device which allows a person to immerse into the display itself and to be surrounded by the display.

A 3D display device may be a stereoscopic display which is adapted to provide different images for each eye. A stereoscopic display may be a head-mounted display with two displays for each eye. A stereoscopic display may further be a display generating images with different polarizations or colours in combination with eye glasses that are adapted to filter out the respective polarized image for one eye or which are adapted to filter out the respective coloured image for one eye. In these cases, a 3D display device may be a monitor or a projector with a screen.

A 3D display device may be a holographic display device which is adapted to generate a light field (or a part therefrom) of the scene or the object to be displayed.

A 3D display device may be a volumetric display device which uses a mechanism inside a volume which is adapted to display light points (voxels) floating in the volume. For example, the voxels may be generated by an image projected to a fast rotating mirror or by a laser pointing to a fast rotating translucent plate. A volumetric display device may comprise a three-dimensional arrangement of LEDs or a plurality of LCDs.

A 3D display device may be a spatially immersive display which uses a six-walled space in which the person can enter and which projects the perspectives of the scene onto the walls of the space. For example, the computation of the images to be projected on each wall could take into consideration the 3D visualization of data, the position of the person in the space and the direction the person is looking at (head tracking).

According to an embodiment of the invention, the process data comprises sensor data, for example from field devices. Sensor data may be obtained by sensors, for example sensors of the industrial plant, connected to the process monitoring system. Sensor data may comprise information directly and indirectly derived from the raw sensor data. For example, the sensor data may comprise data that is calculated from sensor data gathered at different time points. For example, the sensor data may comprise a trend analysis of a plurality of process variables.

According to an embodiment of the invention, the process monitoring system is adapted to control the process. For example, the process monitoring system may be a process control system and may be adapted to influence the behaviour of the process to be monitored or to influence the behaviour of the actuators of the industrial plant to be monitored.

According to an embodiment of the invention, the process data may comprise control data to control the process monitoring system. The control of the process may be conducted directly or indirectly. For example, the control may be done by manipulating or changing or setting control data of the process to be controlled.

For example, sensor data may be compared to predefined control variables (included in the control data) with values calculated from the sensor data. The comparison result may be used for deducing that the process has reached a predefined goal and that further control has to be conducted. For example, the process monitoring system may deduce that the filling level in a tank (sensor data) has reached a predefined value (control data) and that the tank has to be emptied by opening a certain valve.

According to an embodiment of the invention, the process data may comprise actuator data. The actuator data may be derived or calculated from the sensor data and/or the control data. For example, the actuator data may comprise the information, that the above-mentioned valve has to be opened at a certain time. The actuator data may be used by the process monitoring system to control the actuators of the process monitoring system.

The control of the process, the process monitoring system monitors, may be a closed loop control. For example, the process monitoring system may gather sensor data from sensors, may compare the sensor data with predefined control data and may set actuator data for the actuators. Alternatively or additionally, the process data may be visualized by the process monitoring system and a person viewing or monitoring the visualized data may set or adjust control variables comprised by the control data.

According to an embodiment of the invention, the process data may comprise simulated data. For example, the process monitoring system may be adapted to monitor a power generation facility or power grid network. From a model of the consumers connected to the power generation facility or the power grid network, the process monitoring system may simulate how the load will be at a certain time.

According to an embodiment of the invention, the process monitoring system is adapted to manipulate process data based on inputs of a person or an operator.

The process monitoring system may be adapted to control field devices of an industrial plant based on the process data.

According to an embodiment of the invention, the three-dimensional diagram comprises a graph based on the process data. The graph may be based on process data if it contains unchanged values of sensors (raw sensor data, real data) or if it contains data derived from these values, for example by calculations like a moving average. The graph may be based on the process data if it contains simulated data, for example to compare the simulated data with real data or with data derived therefrom.

The three-dimensional diagram may comprise a three-dimensional graph. A three-dimensional graph may be a function of two variables or may be a three-dimensional trajectory. A graph may contain discrete values, like a bar diagram, or may comprise continuous values.

According to an embodiment of the invention, the three-dimensional diagram may comprise mark-up information. Mark-up information may be a label, for example with text, arranged in the vicinity or near an interesting point of the graph, or may be an arrow pointing to a special point in the diagram. Mark-up information may also be auxiliary shapes projected into the three-dimensional diagram. For example, a special point of the diagram may be emphasized by a sphere surrounding the special point of the diagram.

According to an embodiment of the invention, the process monitoring system may be adapted to overlay the diagram with additional mark-up information.

According to an embodiment of the invention, the process data, for example the sensor data, the control data, the actuator data and the simulated data, may be stored in a database. The process data may be retrieved from the database and analyzed to calculate the three-dimensional diagram shown in the 3D display device.

A database may be a device or a module, for example a computer system, which is adapted to store information, i.e. the process data, in a way, such that the information can easily be accessed, managed and updated.

According to an embodiment of the invention, a data warehouse and/or a process historian and process analysis server may be used to analyze the process data. The data warehouse may be connected to the database. The data warehouse may be a repository for the process data, for example a computer system electronically storing the process data. The data warehouse may be adapted to facilitate the analysis of the process data. For example, the data warehouse may be used to "slice" and "dice" the process data, i.e. to generate lower-dimensional views of high-dimensional relationships of the process data and to dynamically select the dimension(s) along which the user wants the data to be analyzed.

According to an embodiment of the invention, the process monitoring system may further comprise a 2D display device, wherein the 2D display device is adapted to display a two-dimensional diagram. A two-dimensional diagram may contain two-dimensional data being based on the process data.

The process monitoring system may comprise additionally to the 3D display device at least one 2D display device, for example a plurality of 2D display devices.

For example, the 2D display device may be used for representation of control trajectories of the process monitoring system. The 2D display device may show multiple variables of the process data in 2D plots with additional embellishments. The 2D display device may show multiple variables in multiple linked 2D plots. The 2D display device may show multiple variables in pseudo-3D-plots or -graphs projected to two dimensions. For example, the two-dimensional diagram may be a slice through the three-dimensional diagram shown in the 3D display device.

According to an embodiment of the invention, the human machine interface device of the process monitoring system comprises multiple 2D screens or 2D display devices, that may be adapted to show or display process data in two-dimensional diagrams.

According to an embodiment of the invention, the process monitoring system may comprise at least a further, second 3D display device or a plurality of 3D display devices.

According to an embodiment of the invention, the process monitoring system comprises an input device. Such an input device may be a keyboard or a mouse that is adapted to manipulate data displayed on a 2D display device. The process monitoring system may be adapted to manipulate process data, for example the control data, based on the input generated by the input device when the input device is actuated by an operator. By manipulating the process data, for example the control data, the human operator may cause the process monitoring system to act on the industrial process, for example, by adjusting parameters or commanding an actuator of the industrial process. The human operator may also manipulate the visualization of the process data with the input device. For example, by actuating the input device the operator may cause the process monitoring system to show other diagrams or to visualize certain variables of the process data in a certain demanded way.

According to an embodiment of the invention, the displayed content, for example the three dimensional diagram, of the 3D display device may be manipulated by the input device.

According to an embodiment of the invention, the process monitoring system may be adapted to move information between a 3D display device and a 2D display device, for example by actuating an input device.

According to an embodiment of the invention, the information displayed in the 3D display device may be manipulated with tactile inputs of touch and multi-touch inside and/or outside the 3D display device. The manipulations of the information may comprise selecting, turning, zooming, slicing, adding and/or removing of information.

According to an embodiment of the invention, the process monitoring system comprises a spatial data input device for inputting spatial data. Spatial data may comprise information of the position of the spatial data input device in space or of the bearing of the spatial data input device in space. The spatial data may contain three coordinates and/or three angles.

The process monitoring system may be adapted to manipulate process data based on the spatial input generated by the spatial input device when being actuated by an operator. For example, the spatial input device may be used for rotating the three-dimensional diagram in the 3D display device or for zooming in a certain part of the three-dimensional diagram. It may also be possible, that the human operator generates a slice through the three-dimensional diagram with the aid of the spatial data input device, for example for displaying the slice on a 2D display device.

According to an embodiment of the invention, the spatial data input device is adapted to detect gestures of an operator. For example, the spatial data input device comprises a camera that is adapted to take images of the operator and the spatial data input device may comprise further an image analyzing device, for example a computer, that is adapted to extract the gestures of the operator from these images. With such a spatial data input device it may be possible that the operator virtually touches the three-dimensional graph displayed in the 3D display device or that the operator touches the mark-up information attached to the three-dimensional graph. For example, the operator may point at an interesting point of the three-dimensional graph and the process monitoring system will zoom to the vicinity of the interesting point. It may also be possible that the operator may point to a certain direction inside the 3D display device and that the process monitoring system in reaction to this gesture will generate a slice through the three-dimensional diagram in the pointed direction and will display this slice on a 2D display device. With such a spatial data input device it may be possible to execute touch and gesture based manipulations of objects, scenes or diagrams displayed in the 3D display device and/or the 2D display device.

According to an embodiment of the invention, the spatial data input device may comprise a spatial pointing device. The spatial data input device may be adapted to detect a spatial position or a spatial bearing of the spatial pointing device. For example, the spatial data input device may comprise a camera that is adapted to take images of the spatial pointing device. The spatial data input device may comprise further an image analyzing device, for example a computer or software module, which is adapted to extract the spatial pointing device and its position and bearing in space from these images. Alternatively or additionally, the spatial data input device may comprise acceleration sensors in the pointing device, from which a spatial data input device may calculate the position and the bearing of the spatial pointing device in space.

According to an embodiment of the invention, the process monitoring system may be adapted to manipulate the diagram in the 3D display device based on the spatial data generated by the data input device. This manipulations may comprise selecting of certain parts of the three-dimensional diagram, rotating or turning of the three-dimensional diagram, the zooming in of interesting points, and slicing, i.e. the extraction of a two-dimensional diagram from a three-dimensional diagram.

According to an embodiment of the invention, the process monitoring system may be adapted to move information between the 3D display device and a 2D display device based on the spatial input with the spatial data input device.

According to an embodiment of the invention, the spatial data input device is adapted to be actuated simultaneously by at least two operators. For example, the spatial data input device is based on a detection system with a camera taking images of the at least two operators. The at least two operators may collaborate to manipulate the information in one 3D display device in a control room. Especially with a volumetric display, the process monitoring system may provide a multi-user interaction.

A further aspect of the invention relates to the use of a 3D display device for visualizing data of a process monitoring system, such as, for example, an above and in the following described process control system. A 3D display device may be used to present one or multiple plant data and/or actual trajectories of multiple plant variables and/or additional information like mark-up information.

A further aspect of the invention relates to a method of monitoring a process. The process may be an industrial process or process of an industrial plant. It may also be possible that the method is used to monitor air traffic control, or public transport. For example, the process of a power generation facility or of a power grid network may be monitored.

According to an embodiment of the invention, the method comprises the steps of: gathering process data, for example from sensors or from a database; generating a three-dimensional diagram from the gathered process data; and visualizing the three-dimensional diagram with a 3D display device.

According to an embodiment of the invention, the method comprises further the steps of: manipulating the three-dimensional diagram with a spatial input device; and adjusting parameters of the industrial process or commanding an actuator of the industrial process with a spatial input device. For example, information displayed in the 3D display device may be moved to a 2D display device with a spatial input device, or an existing field device may be operated following a corresponding input action detected by an input device of the 3D display device.

All method steps described with respect to the embodiments of the process monitoring system may be embodiments of the method described in the above and in the following.

A further aspect of the invention relates to a program element for monitoring a process which, when being executed by a processor, is adapted to carry out the method steps described in the above and in the following.

A further aspect of the invention relates to a computer-readable medium, in which a program element for monitoring a processor stored, which, when being executed by a processor is adapted to carry out the method steps described in the above and in the following.

A computer-readable medium may be a floppy disk, a hard disk, a CD, a DVD, an USB (Universal Serial Bus) storage device, a RAM (Random Access Memory), a ROM (Read Only memory) and an EPROM (Erasable Programmable Read Only Memory). A computer readable medium may also be a data communication network, e.g. the Internet, which allows downloading a program code.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
- Fig. 1: shows a schematic diagram of a process monitoring system according to an exemplary embodiment of the invention.
- Fig. 2: shows a schematic diagram of a process monitoring system according to an exemplary embodiment of the invention.
- Fig. 3: shows a flow diagram of monitoring a process according to an exemplary embodiment of the invention.

The reference symbols used in the drawings, and their meanings, are listed in summary form in the list of reference symbols. In principle, identical or similar parts are provided with the same reference symbols in the figures.

### DETAILED DESCRIPTION OF PREFERRED EMBODIMENTS

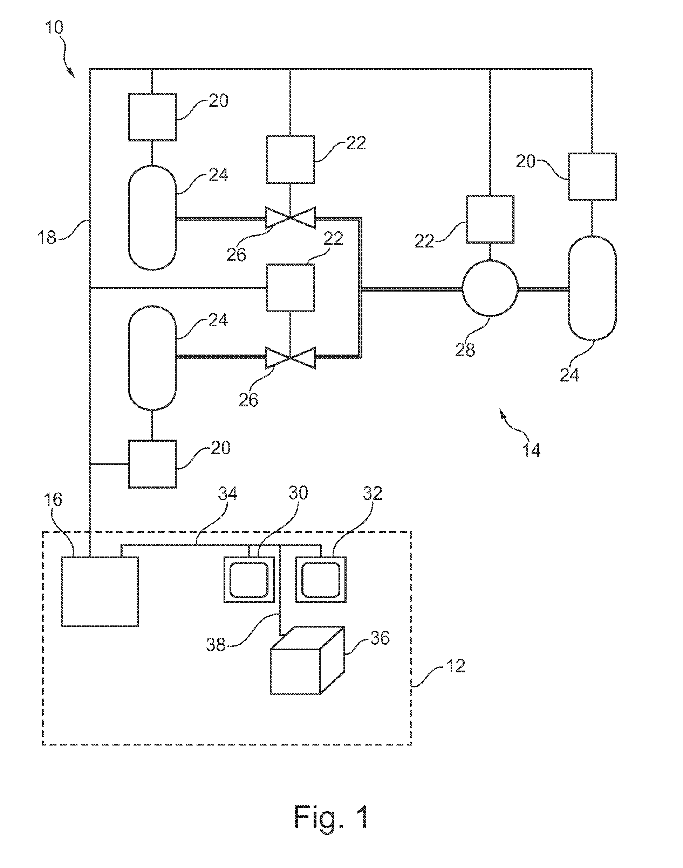

Fig. 1 shows a schematic diagram of a process monitoring system 12 for monitoring a facility 10. Parts of the facility 10 are situated in a control room of the process monitoring system 12, other parts are situated in an industrial plant 14. A control unit 16 in the control room 12 is connected over, for example, a field bus 18 to a plurality of sensors 20 and actuators 22. As depicted in Fig. 1, the field devices 20, 22 may be used to measure the filling level of a tank 24, to open and close valves 26 and to operate a pump 28.

The control unit 16 is adapted to retrieve sensor variables from the sensors 20 and to send control signals to the actuators 22. The retrieved and sent values are stored in the control unit 16 as process data. Further, the control unit 16 is adapted to analyze the gathered process data, to compare it with predefined values and to determine further control signals to be sent to the actuator 22 to the field devices 20, 22 in general.

The control room 12 may be part of the industrial plant 14 but also may be situated far away from the industrial plant. In this case, the field bus or communication line 18 may be part of a communication network, for example the internet. For example, the industrial plant 14 may be a power grid network with components like transformers and power switches large distances remote from each other.

In the control room 12, there are further a first 2D display device 30 and a second 2D display device 32. The two display devices 30, 32 which may be monitors, are connected to the control unit 16 over a communication or signal line 34. Additionally, the process monitoring system 12 comprises a 3D display device 36 that is also connected to the control unit 16 over a further communication or signal line 38.

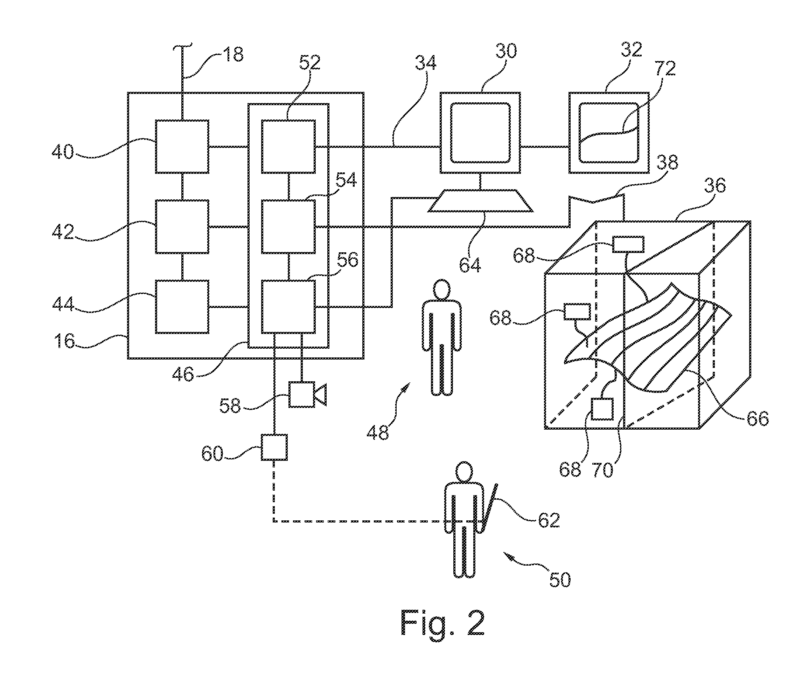

Fig. 2 shows a schematic diagram of parts of the process monitoring system that may be situated in the control room 12.

The control unit 16 comprises a control module 40, which may comprise a processor, for receiving data from the field devices 20, 22 and for sending data to the field devices 20, 22. The control module 40 may further be adapted to execute control tasks of the process monitoring system which do not need an intervention by a human operator.

The control unit 16 comprises further a database module 42 which is connected to the control module 40 to store the data gathered by the control module 40 and to supply the control module 40 with earlier stored data.

The control unit 16 may further comprise a data warehouse module 44 to be used for analyzing and managing the data stored in the database module 42 and for storing the results of previous analysis.

The control unit 16 comprises further a HMI (human machine interface) module 46 that is adapted to retrieve process data from the database module 40, the control module 42 and the data warehouse module 44 and that is adapted to transform the data into a form in which it may be displayed on the display devices 30, 32, 36. Further the HMI module 46 is adapted to process input information created or generated by the human operators 48 and 50, to interpret the inputs and to send the respective commands to the control module 40, the database module 42 and the data warehouse module 44.

For example, the HMI module 46 may retrieve a data input for altering the target value of a certain filling level of a tank. The HMI module 46 will then advise the database module 42 to save the respective target value and will inform the control module 40 that the respective value has changed. As a second example, the HMI module 46 may receive an input that a certain display device should display a certain diagram. In this case, the HMI module 46 will advise the data warehouse module 44 to extract the needed information from the database 42 and to calculate a special view on the data extracted from the database module 42. After that the HMI module 46 will transform the view into a form that is adapted to be displayed on one of the display devices 30, 32, 36.

The HMI module 46 comprises a 2D interface module 52, a 3D interface module 54 and an input module 56. The 2D interface module 52 is connected over the communication line 34 to the two 2D display devices 30, 32. The 2D interface module 52 is adapted to transform data into a form that may be displayed on a 2D display device. For example, the 2D interface module may transform the values of a function that has been created by the data warehouse module 44 into the pixels of a two-dimensional diagram that may be displayed on a monitor 30, 32.

The HMI module 46 comprises further a 3D interface module 54 that is connected over the communication line 38 with the 3D display device 36. Reference numeral 36 may also designate a space 36 or 3D volume 36 which the operator can see or can enter and in which a 3D display device can project or otherwise create a 3D image. The 3D interface module 54 may be adapted to transform data into a form that may be displayed in the 3D display device 36. For example, the 3D interface module 54 may calculate the three-dimensional voxels for a three-dimensional graph from data that has been calculated by the data warehouse module 44.

The 2D interface module 52 and the 3D interface module 54 may be adapted to execute further tasks like the overlaying of the diagrams with mark-up information or for rotating, moving and zooming already displayed diagrams.

The HMI module 46 comprises further an input module 56 which is adapted to retrieve spatial input data from spatial input devices 58, 60, 62. For example, the spatial input devices may comprise a camera 58 that is adapted to take images of the human operators 48, 50 inside the control room 12 or may comprise a receiver 60 of a spatial pointing device 62 that is adapted to determine the spatial position and the bearing of the spatial pointing device 62 inside the control room 12.

The input module 56 is further connected to standard input devices like a keyboard 64 and is adapted to interpret the data coming therefrom. The input module 56 is further adapted to interpret the data from the spatial input devices 58, 60, 62, for example to extract the shape of the operator 48 out of the images taken by the camera 58, and to determine the respective commands that are associated to the spatial input data.

The modules 40, 42, 44, 46, 52, 54, 56 of the control unit 16 may all be located inside one device, for example one single computer but may also be separated far distances from each other. For example, the modules may be the components of distributed systems and may be connected over a communication network like the internet.

The 3D display device 36 shown in Fig. 2 is a volumetric display device which, as depicted, shows a three-dimensional graph 66. The three-dimensional graph 66 is further overlaid with further mark-up information in the form of labels 68 that are attached to certain points of the graph 66. Further, the 3D display device 36 shows a slice 70 through the three-dimensional diagram, which consists of the graph 66 and the labels 68 inside the cube of 3D display device 36. The slice 70 defines a two-dimensional graph 72 that is also displayed in the 2D display device 32.

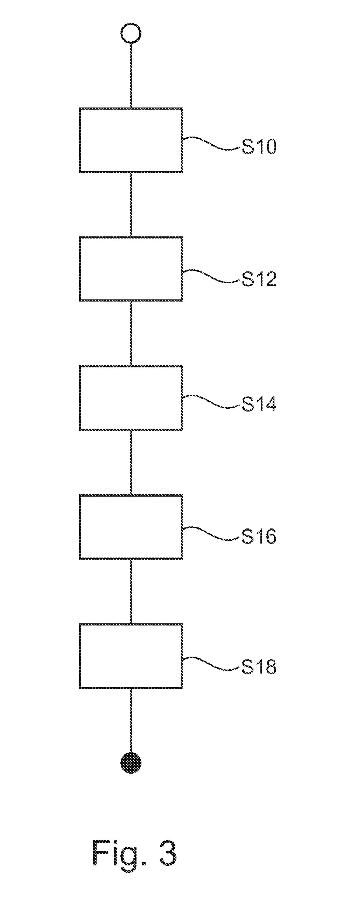

Fig. 3 shows a flow diagram of a monitoring process, which may be executed by the process monitoring system 12 and the operators 48, 50 inside the control room.

In step S10, the control module 40 retrieves data from the field devices of the industrial plant depicted in Fig. 1.

In step S12, the retrieved data is stored into the database module 42. The retrieved data is further processed by the data warehouse module 44 and then sent to the HMI module 46. The 2D interface module 52 transforms the process data stored in the database module 42 and analyzed with the data warehouse module 44 into a form that may be shown on the 2D display devices 30 and 32. A similar task is done by the 3D interface module 54 which transforms the process data into a form displayable by the 3D display device 36.

In step S14, the two human operators 48 and 50 are generating spatial input for the spatial input devices 48 and 60, 62. For example, the operator 48 may execute a gesture that is interpreted by the input module 56 as making a slice 70 through the three-dimensional diagram inside the 3D display device 36. Further, the operator 48 may execute a gesture that is interpreted by the input module 56 in such a way, that the slice 70 should be also displayed with a 2D display device 32.

In step S16 parameters or process data of the process monitoring system are adjusted. For example, the operator 50 moves the spatial pointing device 62 in a way, which is interpreted by the input module 56 that a certain control parameter stored in the database 42 of the process monitoring system should be adjusted or changed. The change of the value of the certain parameter is based on an analysis of the two operators 48, 50 monitoring the diagrams shown in the display devices 30, 32 and 36. For example, the two operators may have noticed that the graph 72 being a slice to the graph 66 indicates a trend of a filling level of a tank, and that the tank has to be emptied faster than it set in the control parameters stored in the database 42. Therefore, the operators 48, 50 decided to change the control parameter such that the tank will be emptied faster in the future.

In step S18, the control module 40 is informed about the changed value in the database 42 and starts to send corresponding signals to the field devices 20, 22.

The functional modules may be implemented as programmed software modules or procedures, respectively; however, one skilled in the art will understand that the functional modules may be implemented fully or partially in hardware.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: facility
- 12: process monitoring system
- 14: industrial plant
- 16: control unit
- 18: field bus
- 20: sensors
- 22: actuators
- 24: tank
- 26: valve
- 28: pump
- 30: 2D display device
- 32: 2D display device
- 34: communication line
- 36: 3D display
- 38: communication line
- 40: control module
- 42: database module
- 44: datawarehouse module
- 46: HMI module
- 48: human operator
- 50: human operator
- 52: 2D interface module
- 54: 3D interface module
- 56: input module
- 58: camera
- 60: receiver
- 62: spatial pointing device
- 64: keyboard
- 66: three dimensional graph
- 68: label
- 70: slice
- 72: two dimensional graph

## Claims

1. A process monitoring system (12) for monitoring an industrial process, the process monitoring system (12) comprising:
a 3D display device (36),
wherein the 3D display device (36) is adapted to display a three dimensional diagram (66), the three dimensional diagram being based on process data of the industrial process.

2. The process monitoring system of claim 1,
wherein the process data comprises sensor data, the sensor data being obtained by sensors (20) of the industrial process that are connected to the process monitoring system.

3. The process monitoring system of claim 1,
wherein the process monitoring system is adapted to control the process.
wherein the process data comprises control data to control the process.

4. The process monitoring system of claim 1,
wherein the three dimensional diagram comprises a graph (66) based on the process data,
wherein the three dimensional diagram comprises mark up information (68).

5. The process monitoring system of one of the claims 1 to 4, comprising:
an input device (64, 58, 60),
wherein the process monitoring system is adapted to manipulate the process data based on an input generated by the input device when the input device is actuated by an operator (48, 50).

6. The process monitoring system of claim 5, comprising:
a spatial data input device (58, 60) for inputting spatial data;
wherein the process monitoring system is adapted to manipulate the process data based on the spatial data generated by the spatial input device when being actuated by an operator (48, 50).

7. The process monitoring system of claim 6,
wherein the spatial data input device (58) is adapted to detect gestures of an operator (48).

8. The process monitoring system of claim 6,
wherein the spatial data input device comprises a spatial pointing device (62),
wherein the spatial data input device is adapted to detect a spatial position or a spatial bearing of the spatial pointing device.

9. The process monitoring system of claim 8,
wherein the process monitoring system is adapted to manipulate the diagram (66) in the 3D display device (36) based on the spatial data generated by the spatial data input device.

10. The process monitoring system of claim 6,
wherein the spatial data input device (58) is adapted to be actuated simultaneously by at least two operators.

11. Use of a 3D display device (38) for visualizing, in a process monitoring system (12) for monitoring an industrial process, process data of the industrial process.

12. A method of monitoring a technical process, the method comprising the steps of:
Obtaining process data;
Generating a three dimensional diagram from the obtained process data;
Visualizing the three dimensional diagram with a 3D display device.

13. The method of claim 12, further comprising the steps of:
Manipulating the three dimensional diagram with a spatial input device; or
Adjusting parameters of the process with a spatial input device.

14. A program element for monitoring a large scale technical process, which, when being executed by a processor, is adapted to carry out the steps of claim 12.

15. A computer-readable medium, in which a program element for monitoring a large scale technical process is stored, which, when being executed by a processor, is adapted to carry out the steps of claim 12.
